# EUROPÄISCHE PATENTSCHRIFT

(11) **EP 0 416 334 B1**
(45) Veröffentlichungstag und Bekanntmachung des Hinweises auf die Patenterteilung: **03.11.1993**
(21) Anmeldenummer: 90115621.6
(22) Anmeldetag: 16.08.1990
(51) Int. Cl.: B65G 60/00

(54) **Vorrichtung zum Entstapeln, Befüllen und Stapeln untereinander gleicher Behälter**
Device for destacking, filling and stacking of identical containers
Dispositif pour désempiler, remplir et empiler des conteneurs qui sont égaux entre eux

(30) Priorität: 06.09.1989 DE 3929568
(43) Veröffentlichungstag der Anmeldung: 13.03.1991
(73) Patentinhaber: AXMANN-FÖRDERTECHNIK GMBH, D-74889 Sinsheim (DE)
(72) Erfinder: Axmann, Norbert, Dipl.-Ing., D-6920 Sinsheim-Ho (DE)
(74) Vertreter: Geitz, Heinrich, Dr.-Ing.

(56) Entgegenhaltungen:
- EP-A- 0 143 945
- DD-A- 243 482
- DE-A- 3 416 928
- DE-A- 3 437 883

## Beschreibung

Die Erfindung bezieht sich auf eine Vorrichtung zum Entstapeln, Befüllen und Stapeln untereinander gleicher Behälter, mit einer Stapelstation für die Aufnahme übereinandergestapelter Leerbehälter, einer Station zum Befüllen jeweils eines Behälters mit nacheinander bzw. in Chargen zugeführten Stückgütern und einer Stapelstation zum Aufnehmen gefüllter Behälter in Übereinanderstapelung, mit zwischen den jeweils untersten Behälter eines Stapels aufnehmenden und freigebenden Stellungen betätigbaren Auflagern sowie je einer Hubeinrichtung zum Absenken bzw. Anheben des jeweils untersten Behälters eines Stapels aus den bzw. in die durch die Auflager definierten Stapelpositionen, und mit Fördermitteln zum Überführen eines entstapelten Behälters aus der Leerbehälter-Stapelstation in die Füllstation sowie - nach dem Befüllen - aus der Füllstation in die andere Stapelstation.

Vorrichtungen dieser Art, die häufig als Behälterfüllstationen bezeichnet werden, sind bereits Stand der Technik. Diese Vorrichtungen haben einen Leerbehälterstapel, dessen jeweils unterster Behälter in eine neben dem Leerbehälterstapel liegende Befüllstation bringbar ist und dann dort mit mittels beispielsweise eines Förderbandes zugeführten Teilen befüllt werden, was jedoch hier nicht weiter interessiert. Nach dem Befüllen wird der Behälter in eine Stapelstation, die neben der Befüllstation angeordnet ist, weitergefördert und dort mit anderen gefüllten Behältern übereinander in einer gegenüber der Förderstrecke erhöhten Stapelposition abgestapelt.

Der Transport der Behälter aus dem Leerstapel über die Befüllstation zu dem Vollbehälterstapel erfolgt dabei mittels eines gewissermaßen den Boden der Anordnung bildenden Rollenförderers. Darüber hinaus sind Hubeinrichtungen vorgesehen, um Behälter in die erhöhte Abstapelposition anzuheben bzw. aus der erhöhten Stapelposition den jeweils untersten Behälter auf den Rollenförderer abzusenken. Auf diese Weise gelingt die seitliche Wegförderung des untersten Behälters aus dem Leerbehälterstapel in die Befüllstation und das Weiterfördern eines gefüllten Behälters zu der Vollbehälterstation, in der ein gefüllter Behälter dann durch Anheben bis zum Wirksamwerden von Auflager in der erhöhten Position abgestapelt wird.

Derartige Vorrichtungen werden vielfach in kunststoffverarbeitenden Betrieben eingesetzt, um die aus Formen von Produktionsmaschinen, wie Kunststoff-Spritzmaschinen, kommenden Teile aufzunehmen. In derartigen Betrieben stehen die Produktionsmaschinen in aller Regel reihenweise nebeneinander, so daß zwischen den einzelnen Maschinen verhältnismäßig wenig Platz vorhanden ist. Aus diesem Grunde können Behälterfüll- und Stapelvorrichtungen zumeist nicht zwischen den einzelnen Maschinen aufgestellt werden, sondern nur stirnseitig davon in den Gängen zwischen benachbarten Maschinenreihen. Allerdings beanspruchen auch dort die vorbekannten Vorrichtungen, bei denen die beiden Stapelstationen mit zwischen ihnen liegender Füllstation in einer Reihe angeordnet sind, soviel Platz, daß Unterbringungsprobleme jedenfalls dann auftreten, wenn gleichzeitig an mehreren benachbarten Maschinen gearbeitet wird und dementsprechend jeder der benachbarten Maschinen eine derartige Vorrichtung zugeordnet werden muß.

Die der Erfindung zugrundeliegende Aufgabe besteht darin, eine Vorrichtung der eingangs angegebenen Art und Zweckbestimmung so zu verbessern, daß sie auch bei engen Raumverhältnissen unproblematisch einsetzbar ist.

Gelöst ist diese Aufgabe erfindungsgemäß dadurch, daß bei der Vorrichtung nach dem Oberbegriff des Patentanspruchs 1 die Stapelstation zum Abstapeln voller Behälter und die Füllstation im Winkel zueinander sowie jeweils unmittelbar neben der Leerbehälterstation angeordnet sind und daß die Fördermittel zum Überführen der Behälter aus der Füllstation in die Vollbehälter-Stapelstation eine sich durch die Leerbehälter-Stapelstation und unter dem Leerbehälterstapel hindurcherstreckende Förderstrecke bilden, die im Winkel geführt ist.

Obgleich beliebige Winkelkonfigurationen vorstellbar und auch unproblematisch realisierbar sind, bilden zweckmäßigerweise die Füllstation und die Vollbehälter-Stapelstation einen rechten Winkel mit der Leerbehälter-Stapelstation als Winkelecke.

Angesichts der erfindungsgemäßen Anordnung der Stapelstationen für die Leer- und Vollbehälter direkt nebeneinander und der Füllstation im Winkel dazu direkt neben der, von oben gesehen, eine Winkelecke bildenden Leerbehälter-Stapelstation hat die erfindungsgemäße Vorrichtung im Vergleich zu bekannten Vorrichtungen mit in Reihe nebeneinander angeordneten Stapelstationen und zwischen diesen aufgenommer Füllstation eine vergleichsweise kleine Längenerstreckung.

Gemäß der Erfindung ausgebildete Vorrichtungen können stirnendig von Produktionsmaschinen in der Weise platzsparend aufgestellt werden, daß jeweils die Füllstation zwischen zwei benachbarten Maschinen hineinragt, während die Vollbehälter-Stapelstation am Stirnende der jeweiligen Maschine steht und die Leerbehälter-Stapelstation eine Winkelecke zwischen den beiden anderen Stationen bildet. Bei der vorerwähnten Verwendung der erfindungsgemäßen Vorrichtung werden von einer Produktionsmaschine einzeln oder in Chargen ausgeworfene Kleinteile einem in der Füllstation der Vorrichtung stehenden Behälter etwa mittels eines Förderbandes zugeführt, was aber bekannt ist und im einzelnen hier nicht weiter interessiert.

Die Förderung jeweils eines gefüllten Behälters aus der Füllstation in die Stapelstation für gefüllte Behälter erfolgt bei der erfindungsgemäßen Vorrichtung durch die eine Winkelecke zwischen der Vollbehälter-Stapelstation und der Füllstation bildende Leerbehälter-Stapelstation hindurch, und zwar unter den übereinandergestapelten Leerbehältern hindurch, von denen der jeweils unterste Behälter von in eine Ausrücklage betätigbaren Auflagern aufgenommen ist.

Dabei hat sich als vorteilhaft erwiesen, wenn als Fördermittel zum Überführen der Leerbehälter aus der Leerbehälter-Stapelstation in die Füllstation und - nach dem Befüllen - zurück in die Leerbehälter-Stapelstation sowie aus dieser in die Vollbehälter-Stapelstation je ein in der jeweiligen Förderrichtung hin- und herbewegbarer Schieber und Führungsbahnen dienen, welche die Behälter aufnehmen und deren Förderung in im Winkel zueinander verlaufenden Förderstrecken ermöglichen. Die hin- und herbewegbaren Schieber können dabei mittels umsteuerbarer Arbeitszylinder betätigt werden.

Gemäß einer Weiterbildung der Erfindung kann es sich bei dem zwischen der Leerbehälter-Stapelstation und der Füllstation hin- und herbewegbaren Schieber um einen U-förmigen Aufnahmerahmen handeln, dessen Offenseite zur Vollbehälter-Stapelstation hinweist, und als Führungsmittel beim Überführen der gefüllten Behälter aus der Leerbehälter-Stapelstation in die Vollbehälter-Stapelstation können zweckmäßigerweise Gleitbleche vorgesehen sein, die bei in der Leerbehälter-Stapelstation stehendem Aufnahmerahmen sich an dessen Schenkel anschließen und bis in die Vollbehälter-Stapelstation reichen.

Bei dieser Weiterbildung greifen die Hubeinrichtungen zum Ent- bzw. Abstapeln der Behälter zwischen den Schenkeln des U-förmigen Aufnahmerahmens und zwischen den sich bis in die Vollbehälter-Stapelstation erstreckenden Gleitblechen hindurch an den Behälterböden an.

Der Schieber zum Überführen der vollen Behälter aus der Leerbehälter-Stapelstation in die Vollbehälter-Stapelstation kann einen auf der von letzterer abgewandten Seite an den Behältern angreifenden Mitnahmearm aufweisen, der bei entsprechender Betätigung einen gefüllten Behälter über die Schenkel des U-förmigen Aufnahmerahmens und die sich daran anschliessenden Gleitbleche in die Vollbehälter-Stapelstation überführt, wo dann die Abstapelung mittels der dieser Stapelstation zugeordneten Hubeinrichtung stattfindet.

Ebenfalls eine Weiterbildung der Erfindung sieht vor, daß ein in der Füllstation aufgenommener Behälter während des Füllvorganges mittels eines Arbeitszylinders gerüttelt wird oder in Förderrichtung zur Leerbehälter-Stapelstation intermittierend hin- und herbewegbar ist, wodurch eine weitgehend gleichmäßige Befüllung des Behälters erreicht wird.

Anhand der beigefügten Zeichnung soll nachstehend eine Ausführungsform der erfindungsgemäßen Vorrichtung zum Entstapeln, Befüllen und Abstapeln untereinander gleicher Behälter erläutert werden. In schematischen Ansichten zeigen:
- Fig. 1: eine Draufsicht auf die Vorrichtung mit je einer Stapelstation für leere und gefüllte Behälter und einer Station zum Befüllen der Behälter,
- Fig. 2: einen Schnitt gemäß der Schnittlinie II-II in Fig. 1 durch die beiden Stapelstationen,
- Fig. 3: eine Seitenansicht zu Fig. 2 mit Blick auf die Leerbehälter-Stapelstation und die Füllstation,
- Fig. 4: ein Förderschema zur Verdeutlichung der Förderwege der Behälter von der Leerbehälter-Stapelstation in die Füllstation und von dieser zur Vollbehälter-Stapelstation.
- Fig. 5: in einer dem Schnittverlauf V-V in Fig. 1 entsprechenden - vergrößerten - Schnittansicht die Aufnahme des Leerbehälterstapels auf den am untersten Behälter angreifenden betätigbaren Auflagern,
- Fig. 6: einen Querschnitt gemäß der Schnittlinie VI-VI in Fig. 5 durch die Füllstation und
- Fig. 7: in einer ebenfalls vergrößerten Ansicht einen Querschnitt gemäß der Schnittlinie VII-VII in Fig. 1 durch die Vollbehälter-Stapelstation.

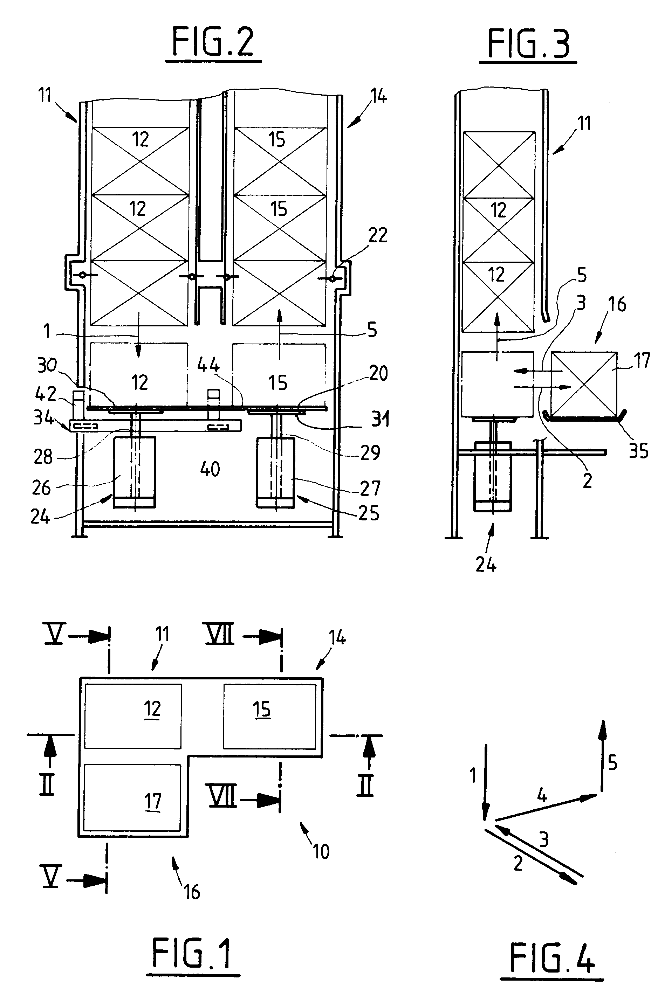

Bei der in den Fig. 1 bis 3 veranschaulichten Vorrichtung 10 sind eine Stapelstation 11 für die Aufnahme von Leerbehältern 12 und eine Stapelstation 14 für die Aufnahme gefüllter Behälter 15 direkt nebeneinander sowie eine Station 16 zum Füllen jeweils eines mit 17 bezeichneten Behälters mit nacheinander oder auch chargenweise zugeführten Kleinteilen im rechten Winkel zu den beiden Stapelstationen 11, 14 und direkt neben der Leerbehälter-Stapelstation 11 angeordnet. Die in Fig. 2 veranschaulichte Schnittansicht durch die beiden Stapelstationen 11, 14 zeigt die Übereinanderstapelung sowohl der Leerbehälter 12 als auch der gefüllten Behälter 15 in einer gegenüber einer horizontalen Förderebene 20 um ein Maß größer als die Vertikalerstreckung der Behälter erhöhten Lage.

Gehalten werden die übereinandergestapelten Behälter mittels in Fig. 2 nur schematisch angedeuteter Auflager 22, die in unten noch zu beschreibender Weise zwischen ihrer die Behälter abstützenden Stellung und einer die Behälter freigebenden Stellung betätigbar sind und jeweils am untersten Behälter 12, 15 eines Behälterstapels angreifen.

Jede der Stapelstationen 11, 14 ist mit einer Hubeinrichtung 24, 25 ausgerüstet, um die Leerbehälter 12 in vertikaler Richtung aus der erhöhten Stapelposition in die Förderebene 20 abzusenken bzw. aus letzterer die gefüllten Behälter 15 in die erhöhte Stapelposition anzuheben. Jede dieser Hubeinrichtungen besitzt einen Arbeitszylinder 26, 27 mit einem in vertikaler Richtung ausfahrbaren Kolben 28, 29, an dessen vom Arbeitszylinder entfernten Ende ein Teller 30, 31 angeordnet ist, der beim Ent- bzw. Abstapeln der Behälter unterseitig an deren Boden angreift.

Ferner sind im Grundgestell der Vorrichtung Fördermittel 33, 34 zum Überführen von Leerbehältern in die Füllstation 16 einerseits und aus der Füllstation in die Vollbehälter-Stapelstation 14 andererseits vorgesehen. Die Fördermittel 33 zum Überführen von Behältern aus der Stapelstation 11 in die Füllstation 16 und nach dem Befüllen aus dieser zurück in die Leerbehälter-Stapelstation umfaßt einen U-förmigen Aufnahmerahmen 35 mit zur Vollbehälter-Stapelstation 14 hinweisender Offenseite, der mittels eines Arbeitszylinders 36 zwischen einer Stellung der Leerbehälter-Stapelstation und der Füllstation hin- und herbewegbar ist und der die zu überführenden Behälter aufnimmt. Bei diesem Arbeitszylinder handelt es sich um einen Pneumatikzylinder ohne Kolbenstange, der einen seitlich durch die Zylinderwandung hinausragenden und mit dem Aufnahmerahmen verbundenen Kolbenfortsatz 37 besitzt. Die Fördermittel 34 zum Überführen gefüllter Behälter aus der Leerbehälter-Stapelstation 11 in die Vollbehälter-Stapelstation 14 umfassen einen mittels eines gleichartigen Arbeitszylinders 40 mit einem sich durch einen Längsschlitz in den Zylinderwandungen hindurcherstreckenden Fortsatz 41 und einen mit letzterem verbundenen Schieber 42 sowie Gleitbleche 44, die sich bei in der Leerbehälter-Stapelstation stehendem Aufnahmerahmen 35 an dessen Offenseite anschließen und die zu fördernden Behälter beidseitig unterfassend bis in die Vollbehälter-Stapelstation erstrecken.

Bei bestimmungsgemäßer Verwendung der Vorrichtung sind in der Leerbehälter-Stapelstation 11 in Übereinanderstapelung mehrere Leerbehälter 12 aufgenommen. Mittels der dieser Stapelstation zugeordneten Hubeinrichtung 24 wird der unterste Behälter dieses Stapels bei gleichzeitiger Entriegelung der Auflager 22 gemäß Pfeil 1 in die gestrichelt bei 12′ angedeutete Lage in der Transportebene 20 abgesenkt und auf dem U-förmigen Aufnahmerahmen 35 aufgenommen. Die Auflager 22 greifen dann an dem dann untersten Behälter 12 im Stapel an und stützen diesen mit den darüber gestapelten Leerbehältern in der erhöhten Stapelposition ab.

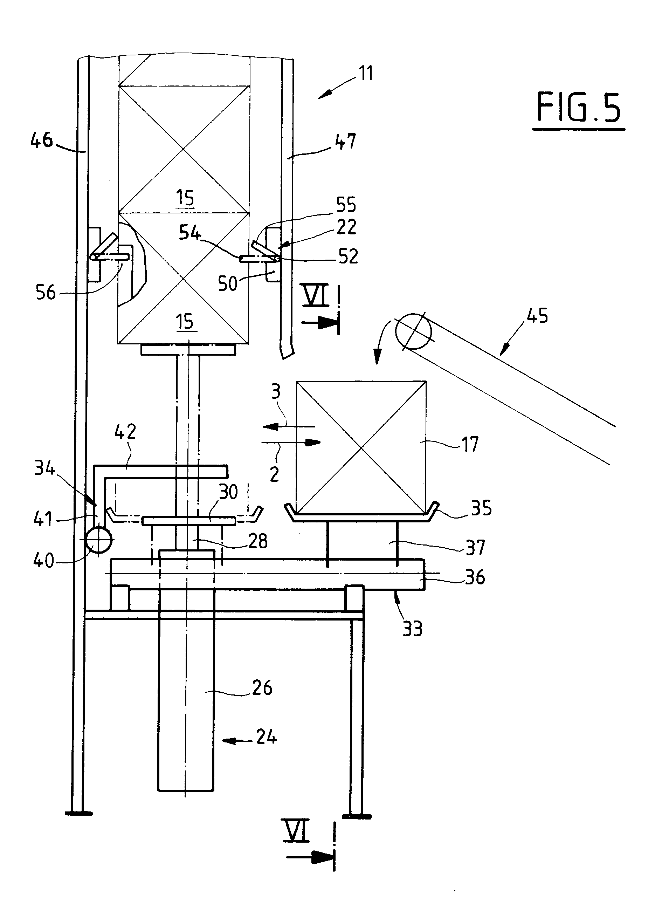

Mittels der in Richtung zur Füllstation 16 wirkenden Fördereinrichtung 33 wird dann der abgestapelte und auf dem Rahmen 35 aufgenommene Leerbehälter gemäß Pfeil 2 in die Füllstation 16 gefördert. Dies zeigen die Fig. 3 und 5. Nach dem Befüllen des Behälters in der Füllstation 16, etwa mittels eines in Fig. 5 angedeuteten Förderbandes 45, erfolgt mittels derselben Fördereinrichtung der Rücktransport des gefüllten Behälters gemäß Pfeil 3 in die Leerbehälterstation 11. Anschließend wird der gefüllte Behälter mittels der Fördereinrichtung 34 gemäß Pfeil 4 in die Vollbehälter-Stapelstation 14 transportiert, um anschliessend durch Betätigung der dieser Stapelstation zugeordneten Hubeinrichtung 25 gemäß Pfeil 5 angehoben und in einer erhöhten Stapelposition abgestapelt zu werden, in der die noch näher zu beschreibenden Auflager 22 den gefüllten Behälter 15 ggf. bereits über diesem abgestapelte Behälter abstützen.

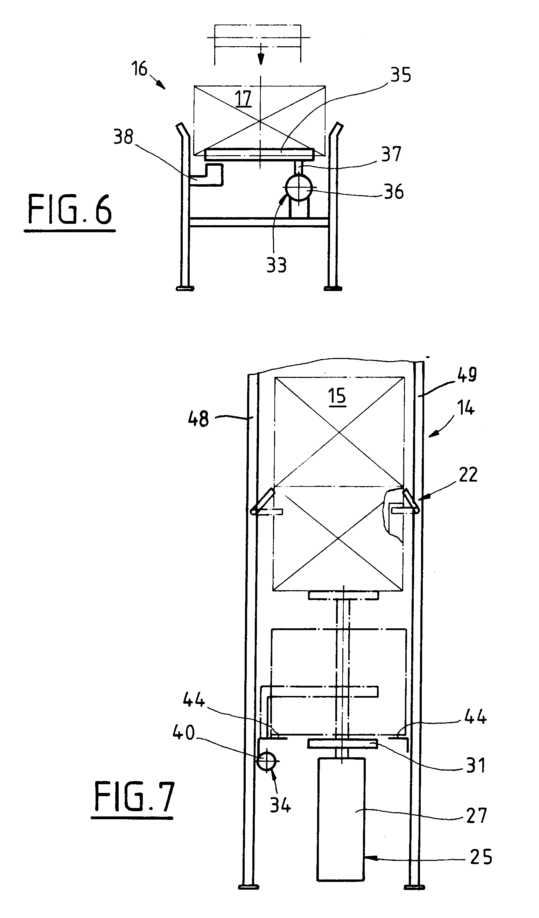

Wie insbesondere die Fig. 6 und 7 zeigen, greifen die Hubmittel 24, 25 beim Entstapeln der Leerbehälter und beim Abstapeln der gefüllten Behälter zwischen den Schenkeln des U-förmigen Aufnahmerahmens 35 und zwischen den sich bis in die Vollbehälter-Stapelstation 14 hineinerstreckenden seitlichen Gleitblechen 44 hindurch an den Behälterböden an.

Die Fig. 2 und 3 zeigen, daß die auf den genannten Auflagern 22 aufgenommenen Behälter 12, 15 in einem vertikalen Abstand von der Förderebene 20 der Vorrichtung gehalten sind, der größer ist als die Vertikalerstreckung der Behälter. Die einzelnen Bewegungsvorgänge beim Entnehmen eines Leerbehälters 12 aus dem Leerbehälterstapel, dessen Überführung in die Füllstation 16 sowie nach dem Befüllen zurück in die Leerbehälterstation und von dort in die Vollbehälterstation 14 sowie die anschließende Höhenabstapelung zeigen auch die Pfeile 1 bis 5 des Förderwegschema in Fig. 4.

In gegenüber Fig. 2 vergrößerten Darstellungen veranschaulichen Fig. 5 und 7 die Ausbildung der Auflager 22 für die Aufnahme von Leerbehältern 12 bzw. Vollbehältern 15 in den erhöhten Stapelpositionen in der Stapelstation 11 bzw. 14. Diese Auflager bestehen aus an vertikalen Rahmenteilen 46, 47 bzw. 48, 49, welche die Stapelstationen seitlich begrenzen, angebrachten Lagerblöcken 50 und in diesen um horizontal verlaufende Schwenkachsen 52 zwischen einer Horizontalstellung und einer nach oben gerichteten Ausrücklage verschwenkbaren Konsolen 54, die in der Stapelposition in der aus Fig. 5 ersichtlichen Weise in Griffausnehmungen 56 am oberen Rand des jeweils untersten Behälters 12 bzw. 15 im Stapel eingreifen.

Wenn aus dem in Fig. 5 veranschaulichten Behälterstapel ein Behälter 12 entstapelt werden soll, muß dafür mittels der Hubeinrichtung 24 der gesamte Stapel um ein solches Maß angehoben werden, daß die schwenkbaren Konsolen 54 in die gestrichelt bei 55 angedeuteten Lagen gelangen, in denen sie beim nachfolgenden Absenken des gesamten Behälterstapels zunächst arretiert, aber nachdem der im Stapel unterste Behälter 12 bei seiner Abwärtsbewegung die Auflager 22 passiert hat, zum erneuten Eingriff in die Griffausnehmungen 56 des nächstfolgenden Behälters 12 im Stapel freigegeben werden. In Fig. 5 ist neben der Aufnahme der Behälter 12 auf den genannten Auflagern auch die Hubeinrichtung 24 gezeigt und in gestrichelten Linien deren Angriff am Boden des im Stapel untersten Behälters angedeutet.

Beim Abstapeln eines vollen Behälters in der Vollbehälter-Stapelstation wird der Behälter 15 mittels der Hubvorrichtung 25, deren den Boden des abzustapelnden Behälters untergreifender Teller zwischen den Gleitblechen 44 hochfährt, angehoben und trifft mit seinem oberen Rand auf den Randbereich des untersten der bereits abgestapelten Behälters, worauf beim weiteren Hochfördern der gesamte Behälterstapel angehoben wird und die bis dahin in Eingriffslage mit dem untersten Behälter stehenden Konsolen 54 in die gestrichelt bei 55 angedeuteten Lagen nach oben verschwenken. Zum Abstapeln muß jeder Behälter um ein solches Maß über die erhöhte Stapelposition des im Stapel jeweils untersten Behälters angehoben werden, daß ein Verschwenken der an den Lagerböcken 50 angelenkten Konsolen 54 in die in der Nähe des oberen Behälterrandes angeordneten Griffausnehmungen 56 gelingt.

## Patentansprüche

1. Vorrichtung zum Entstapeln, Befüllen und Stapeln untereinander gleicher Behälter, mit einer Stapelstation für die Aufnahme übereinandergestapelter Leerbehälter, einer Station zum Befüllen jeweils eines Behälters mit nacheinander bzw. in Chargen zugeführten Stückgütern und einer Stapelstation zum Aufnehmen gefüllter Behälter in Übereinanderstapelung, mit zwischen den jeweils untersten Behälter eines Stapels aufnehmenden und freigebenden Stellungen betätigbaren Auflagern sowie je einer Hubeinrichtung zum Absenken bzw. Anheben des jeweils untersten Behälters eines Stapels aus den bzw. in die durch die Auflager definierten Stapelpositionen, und mit Fördermitteln zum Überführen jeweils eines entstapelten Behälters aus der Leerbehälter-Stapelstation in die Füllstation sowie - nach dem Befüllen - dieses Behälters aus der Füllstation in die andere Stapelstation,
dadurch gekennzeichnet,
daß die Stapelstation (14) zum Abstapeln voller Behälter (15) und die Füllstation (16) im Winkel zueinander sowie jeweils unmittelbar neben der Leerbehälter-Stapelstation (11) angeordnet sind und daß die Fördermittel (33, 34) eine sich unter dem Leerbehälterstapel hindurcherstreckende, im Winkel geführte Förderstrecke bilden.

2. Vorrichtung nach Anspruch 1, dadurch gekennzeichnet, daß die Füllstation (16) und die Vollbehälter-Stapelstation (14) - von oben gesehen - im rechten Winkel zueinander mit der dazwischenliegenden Leerbehälter-Stapelstation (11) als Winkelecke angeordnet sind.

3. Vorrichtung nach Anspruch 1 oder 2, dadurch gekennzeichnet, daß als Fördermittel (33, 34) zum Überführen der Leerbehälter aus der Leerbehälter-Stapelstation (11) in die Füllstation (16) und - nach dem Befüllen - in die Leerbehälter-Stapelstation (11) sowie aus dieser in die Vollbehälter-Stapelstation (14) je ein in der jeweiligen Förderrichtung hin- und herbewegbarer Schieber (35, 42) und Führungsbahnen (38, 44) dienen, welchen den Behälter aufnehmen und deren Förderung in im rechten Winkel zueinander verlaufenden Förderstrecken ermöglichen.

4. Vorrichtung nach Anspruch 3, dadurch gekennzeichnet, daß die hin- und herbewegbaren Schieber (35, 42) mittels umsteuerbarer Arbeitszylinder (36, 40) betätigt sind.

5. Vorrichtung nach Anspruch 3 oder 4, dadurch gekennzeichnet, daß es sich bei dem zwischen der Leerbehälter-Stapelstation (11) und der Füllstation (16) hin- und herbewegbaren Schieber um einen U-förmigen Aufnahmerahmen (35) handelt, dessen Offenseite zur Vollbehälter-Stapelstation (14) hinweist und daß sich bei in der Leerbehälter-Stapelstation stehendem Aufnahmerahmen an dessen Schenkel bis in die Vollbehälter-Stapelstation reichende Gleitbleche (44) anschließen.

6. Vorrichtung nach Anspruch 5, dadurch gekennzeichnet, daß die Hubeinrichtungen (24, 25) zum Ent- bzw. Abstapeln der Behälter zwischen den Schenkeln des U-förmigen Aufnahmerahmens (35) und zwischen den Gleitblechen (45) hindurch an den Behälterböden angreifen.

7. Vorrichtung nach einem der Ansprüche 3 bis 6, dadurch gekennzeichnet, daß der Schieber zum Überführen voller Behälter aus der Leerbehälter-Stapelstation (11) in die Vollbehälter-Stapelstation (14) einen auf der von letzterer abgewandten Seite an den Behältern angreifenden Mitnahmearm (42) aufweist.

8. Vorrichtung nach einem der Ansprüche 1 bis 7, dadurch gekennzeichnet, daß ein in der Füllstation (16) aufgenommener Behälter während des Füllvorganges mittels eines Arbeitszylinders gerüttelt wird oder in Förderrichtung zur Leerbehälter-Stapelstation intermittierend hin- und herbewegbar ist.

## Claims

1. Device for the unstacking, filling and stacking of identical containers, with a stacking station for the reception of empty containers stacked one above the other, a station for filling one container at a time with piece goods advanced one after the other or in batches and a stacking station for the reception of filled containers in vertical stacking, with supports actuable between the settings receiving and releasing the respective lowermost container of a stack as well as with a respective lifting equipment for the lowering or raising of the respective lowermost container of a stack out of or into the stacking positions defined by the supports and with conveying means for transferring a respective unstacked container out of the empty container stacking station into the filling station as well as - after the filling - this container out of the filling station into the other stacking station, characterised thereby, that the stacking station (14) for the stacking of full containers (15) and the filling station (16) are arranged each at an angle to the other as well as each directly beside the empty container stacking station (11) and that the conveying means (33, 34) form a conveying path led at an angle and extending through below the empty container stack.

2. Device according to claim 1, characterised thereby, that the filling station (16) and the full container stacking station (14) - as seen from above - are arranged as angle corner each at a right angle to the other with the empty container stacking station (11) lying therebetween.

3. Device according to claim 1 or 2, characterised thereby, that a respective slide (35, 42), which is movable to and fro in the respective conveying direction and guide tracks (38, 44), which receive the containers and enable their conveying in conveying paths extending one at a right angle to the other, serve as the conveying means (33, 34) for the transfer of the empty containers out of the empty container stacking station (11) into the filling station (16) and - after the filling - into the empty container stacking station (11) as well as out of this into the full container stacking station (14).

4. Device according to claim 3, characterised thereby, that the slides (35, 42), which are movable to and fro, are actuated by means of reversible operating cylinders (36, 40).

5. Device according to claim 3 or 4, characterised thereby, that a U-shaped support frame (35), the open side of which points to the full container stacking station (14), is concerned in the case of the slide which is movable to and fro between the empty container stacking station (11) and the filling station (16) and that, when the support frame is standing in the empty container stacking station, its limbs are adjoined by metal slide plates (44) reaching into the full container stacking station (14).

6. Device according to claim 5, characterised thereby, that the lifting equipments (24, 25) for the unstacking and stacking of the containers engage at the container bases through between the limbs of the U-shaped support frame (35) and between the metal slide plates (44).

7. Device according to one of the claims 3 to 6, characterised thereby, that the slide for the transfer of full containers out of the empty container stacking station (11) into the full container stacking station (14) comprises an entraining arm (42) engaging at the containers on the side facing away from the latter station.

8. Device according to one of the claims 1 to 7, characterised thereby, that a container received in the filling station (16) is shaken by means of an operating cylinder or intermittently movable to and fro in the conveying direction to the empty container stacking station during the filling operation.

## Revendications

1. Dispositif pour désempiler, remplir et empiler des conteneurs identiques entre eux, comportant une station de gerbage, destinée à recevoir des conteneurs vides empilés les uns sur les autres, une station pour remplir un conteneur avec des marchandises au détail amenées les unes après les autres ou par lots, et une station de gerbage destinée à recevoir des conteneurs remplis empilés les uns sur les autres, comportant des appuis, pouvant être manoeuvrés entre la position de réception et la position de libération du conteneur inférieur d'un empilement, et, pour chaque conteneur, un dispositif de levage destiné à abaisser ou à lever le conteneur inférieur d'un empilement, à partir des positions de gerbage ou aux positions de gerbage définies par les appuis, et comportant des moyens de convoyage, destinés à transporter un conteneur désempilé, de la station de gerbage des conteneurs vides à la station de remplissage et, après remplissage, de la station de remplissage à l'autre station de gerbage, caractérisé en ce que la station de gerbage (14), destinée à empiler des conteneurs pleins (15), et la station de remplissage (16) sont disposées en faisant un angle l'une avec l'autre, et de même immédiatement à côté de la station de gerbage des conteneurs vides (11), et que les moyens de convoyage (33, 34) forment une ligne de convoyage s'étendant en-dessous de la pile des conteneurs vides, selon un certain angle.

2. Dispositif selon la revendication 1, caractérisé en ce que la station de remplissage (16) et la station de gerbage des conteneurs pleins (14) sont disposées, quand on regarde d'en haut, à angle droit l'une par rapport à l'autre, le sommet de l'angle droit étant représenté par la station de gerbage des conteneurs vides (11) située entre elles.

3. Dispositif selon les revendications 1 ou 2, caractérisé en ce qu'on utilise en tant que moyens de convoyage (33, 34) destinés à transférer les conteneurs vides de la station de gerbage des conteneurs vides (11) à la station de remplissage (16) et, après remplissage, à la station de gerbage des conteneurs vides (11), et de cette dernière à la station de gerbage des conteneurs pleins (14), un coulisseau (35, 42) pouvant se déplacer dans un sens et dans l'autre dans la direction du transport, et des coulisses (38, 44), qui saisissent les conteneurs et permettent leur déplacement dans des lignes de convoyage perpendiculaires l'une à l'autre.

4. Dispositif selon la revendication 3, caractérisé en ce que les coulisseaux (35, 42) pouvant se déplacer dans un sens et dans l'autre sont actionnés à l'aide de vérins réversibles (36, 40).

5. Dispositif selon les revendications 3 ou 4, caractérisé en ce que, pour ce qui concerne le coulisseau pouvant se déplacer dans un sens et dans l'autre entre la station de gerbage des conteneurs vides (11) et la station de remplissage (16), il s'agit d'un cadre récepteur en U (35), dont le côté ouvert est dirigé vers la station de gerbage des conteneurs pleins (14), et que, dans le cadre récepteur se trouvant dans la station de gerbage des conteneurs vides, des tôles de glissement (44) prolongent ses branches, jusqu'à la station de gerbage des conteneurs pleins.

6. Dispositif selon la revendication 5, caractérisé en ce que les dispositifs de levage (24, 25) destinés à désempiler et à empiler les conteneurs, agissent sur le fond des conteneurs entre les branches du cadre récepteur en U (35) et entre les tôles de glissement (45).

7. Dispositif selon l'une des revendications 3 à 6, caractérisé en ce que le coulisseau destiné à transférer des conteneurs pleins de la station de gerbage des conteneurs vides (11) à la station de gerbage des conteneurs pleins (14) comporte un bras d'entraînement (42), qui agit sur le côté des conteneurs opposé à cette dernière.

8. Dispositif selon l'une des revendications 1 à 7, caractérisé en ce qu'on fait vibrer à l'aide d'un vérin, pendant l'opération de remplissage, un conteneur placé dans la station de remplissage (16), ce conteneur pouvant aussi être déplacé dans un sens et dans l'autre par intermittences dans la direction du transport jusqu'à la station de gerbage des conteneurs vides.
